# EUROPÄISCHE PATENTSCHRIFT

(11) **EP 3 825 021 B1**
(45) Veröffentlichungstag und Bekanntmachung des Hinweises auf die Patenterteilung: **14.02.2024**
(21) Anmeldenummer: 20208453.9
(22) Anmeldetag: 18.11.2020
(51) Int. Cl.: B21C 37/26

(54) **VERFAHREN SOWIE VORRICHTUNG ZUR HERSTELLUNG EINES RIPPENROHRES**
METHOD AND DEVICE FOR PRODUCING A FINNED TUBE
PROCÉDÉ AINSI QUE DISPOSITIF DE FABRICATION D'UN TUBE À AILETTES

(30) Priorität: 20.11.2019 DE 102019131313
(43) Veröffentlichungstag der Anmeldung: 26.05.2021
(73) Patentinhaber: Schmöle GmbH, 58730 Fröndenberg (DE)
(72) Erfinder: Leutloff, Stefan, 44534 Lünen (DE)
(74) Vertreter: Roche, von Westernhagen & Ehresmann

(56) Entgegenhaltungen:
- EP-A2- 3 243 598
- EP-B1- 0 303 074
- CH-A- 375 031
- DE-A1- 1 615 143
- GB-A- 843 200
- GB-A- 1 013 315
- JP-A- S57 187 589
- US-A- 2 440 803
- US-A- 3 436 517
- US-A- 4 542 568

## Beschreibung

Die Erfindung betrifft gemäß einem ersten Aspekt ein Verfahren zur Herstellung eines Rippenrohres.

Derartige Rippenrohre weisen in der Regel einen Rohrgrundkörper auf, der an seiner Außenseite wendelförmig mit mindestens einem Band berippt ist bzw. wird. Im Kontaktbereich von Band und Rohrgrundkörper wird das Band befestigt, vorzugweise mithilfe eines Lasers verschweißt.

Derartige Rippenrohre werden bspw. in Wärmetauschern eingesetzt, welche eine wichtige Rolle in der Klimatechnik spielen. Sie erhöhen die Effizienz von Heizanlagen und senken somit den Verbrauch und die Kosten, wodurch sie auch im Klimaschutz eine entscheidende Rolle spielen. Die (Spiral-)Rippenrohre können dazu bspw. zu kompakten Wärmetauschern gebündelt werden.

Bei den Rippenrohren handelt es sich typischerweise um dünnwandige, metallische Rohrgrundkörper (einer im Wesentlichen geraden Ausbildung), welche spiralförmige Kühlrippen besitzen, um die Oberfläche zu vergrößern.

Die Dichte an Kühlrippen (gemessen in Rippen/Längeneinheit) entscheidet dabei über die thermischen Eigenschaften. Nicht immer ist aber eine möglichst große Steigung gewünscht, weshalb es bekannt ist, Rippenrohre mit voneinander unterschiedlichen Steigungen in (unterschiedlichen) Wärmetauschern zu verbauen.

Die konstante Rippensteigung eines Rohres ist dabei dem Herstellungsverfahren geschuldet: So liegt das die Rippen ausbildende Band typischerweise als Coil- oder Endlosmaterial vor und wird über eine (bspw. Umlenkrollen umfassende) Führung zum Schweißprozess geführt. Der Übergabepunkt der Führung, auch abgebendes Führungselement genannt, ist dabei statisch ausgebildet, während der Rohrgrundkörper um die eigene Achse dreht und linear, axial verfahren wird.

Auch wenn das beschriebene Verfahren in der Vergangenheit zuverlässig funktioniert hat, so besteht doch das stete Bemühen, ein Verfahren bereitzustellen, welches variabel einsetzbarere Rippenrohre hervorbringt.

Die Erfindung löst diese Aufgabe gemäß einem ersten Aspekt mit den Merkmalen des Patentanspruches 1, insbesondere mit denen des Kennzeichenteils, und ist demnach dadurch gekennzeichnet, dass das Führungselement während des Befestigungsvorgangs des Bandes an dem Rohrgrundkörper (vorzugsweise hinsichtlich seiner Anordnung und/oder Ausrichtung zum Rohrgrundkörper) derart verstellt wird, dass der Anstellwinkel des Bandes an die Geschwindigkeit oder Geschwindigkeitsänderung des Rohrgrundkörpers angepasst wird.

Aus der EP 3 243 598 A2 der Anmelderin ist dabei grundsätzlich schon ein Verfahren zur Herstellung einer variablen Steigung an einem Rohr bekannt. Diese Druckschrift bildet die Basis für den Oberbegriff des Anspruchs 1.

Andere Verfahren, verstellbare Führungselemente betreffend, sind dabei aus dem Stand der Technik grundsätzlich bekannt, so beispielsweise aus der GB 1 013 315 A, der EP 0 303 074 B1, welche die Basis für den Oberbegriff des Anspruchs 7 bildet, und der GB 843 200 A, wobei dort jedoch immer lediglich händische Verstellmöglichkeiten mit Hilfe von Langlöchern oder ähnlichem offenbart sind und gerade keine Verstellung während des Befestigungsvorgangs.

Mit anderen Worten besteht die Idee der Erfindung darin, den Übergabepunkt der Führung, insbesondere hinsichtlich seiner Anordnung zum Rohrgrundkörper, einstellbar, und somit insbesondere nicht statisch (wie dies aus dem Stand der Technik bisher bekannt ist) auszugestalten.

Auf diese Weise kann das Band bei beschleunigtem Rohrgrundkörper an diesem angebracht werden, indem das Führungselement durch ein Verstellen den Anstellwinkel des Bandes an die (sich ändernde) Geschwindigkeit des Rohrgrundkörpers anpasst.

Allgemein gesagt erfolgt eine Verstellung des Führungselementes in Abhängigkeit von der Geschwindigkeit(-sänderung) des Rohrgrundkörpers.

Bei dieser Geschwindigkeit kann es sich um die Axialgeschwindigkeit und/oder die Rotationsgeschwindigkeit des Rohrgrundkörpers handeln.

Der Rohrgrundkörper wird in einer entsprechenden Förderanlage dabei typischerweise linear, also in Axial-Richtung, gefördert und dreht sich dabei vorzugsweise um die eigene Achse.

In dem oben beschriebenen Verfahren führt insbesondere die Änderung der Geschwindigkeit des Rohrgrundkörpers (in Axialrichtung) zu einer Änderung der Steigung der Rippen bzw. des angebrachten Bandes im Bereich eines (einzelnen) Rippenrohres.

Während es aus dem Stand der Technik lediglich bekannt ist, Rippenrohre mit konstanten Steigungen herzustellen, ermöglicht das beschriebene Verfahren erstmals die Herstellung eines Rippenrohres mit einer variierenden Steigung.

Zwar bestanden durch die Anmelderin auch Versuche, eine Änderung der Steigung lediglich durch eine Beschleunigung des Rohrgrundkörpers (bei statischem Führungselement) zu erreichen. Dies zeigte in der Praxis jedoch nur geringere Erfolge, da die Befestigung nicht reibungslos funktionierte.

Erst die Verstellbarkeit des Führungselementes sorgt für einen reibungslosen Ablauf der Befestigung des Bandes am Rohrgrundkörper bei einer variierenden Steigung. So kann das Führungselement durch die Verstellbarkeit insbesondere den Anstellwinkel des Bandes am Rohr während einer (positiven oder negativen) Beschleunigung (axial und/oder rotatorisch) des Rohrgrundkörpers nachführen.

Unabhängig von einer variierenden Steigung der Bandrippen bringt die Verstellbarkeit während des Berippungsprozesses aber auch andere Vorteile mit sich, bspw. die Möglichkeit, auf Änderungen im Produktionsablauf oder ähnliches zu reagieren oder (abschnittweise) den Abstehwinkel zu verändern (sofern gewünscht).

Grundsätzlich ist es aber auch möglich, dass das Führungselement in einer Produktionspause verstellt wird, zum Beispiel, um für Wartungszwecke besser an den Befestigungspunkt oder den Rohrgrundkörper zu gelangen oder ähnliches.

Das Verstellen erfolgt dabei automatisch oder automatisiert, insbesondere nach vorgegebenen Zeitpunkten oder Band- oder Rohrgrundkörperlängenverlagerungen. Grundsätzlich ist von der Erfindung aber auch umfasst, dass die Verstellung manuell erfolgt, wobei dies wohl in der Praxis ein eher seltenerer Fall sein wird.

Beim erfindungsgemäßen Führungselement, welches verstellbar ist, handelt es sich vorzugsweise um das Führungselement, welches dem Rohrgrundkörper zugeordnet ist bzw. dem Kontakt von Rohrgrundkörper und Band. Das Führungselement übergibt das Band dabei an den Rohrgrundkörper, vorzugsweise ohne, dass das Band dazwischen/zwischenzeitlich noch mit anderen Elementen in Kontakt gerät.

Das Führungselement kann hierzu insbesondere ein Umlenkelement aufweisen, bspw. ein abrollendes nach Art einer Rolle oder alternativ auch ein statisches nach Art einer Führungsfläche. Insbesondere kann das Führungselement eine Kulissenführung oder ähnliches aufweisen.

Für die Erfindung wesentlich ist, dass das Führungselement verstellbar ist, sodass bspw. die Führungsfläche oder die Rolle oder ähnliches derart verstellt werden kann, dass das Band durch eine derartige Verstellung eine geänderte Ausrichtung, insbesondere im Hinblick auf den Rohrgrundkörper, aufweist.

Insbesondere kann das Führungselement verschoben werden, also bspw. die Achse einer entsprechenden Rolle oder die Führungsfläche als solche. Vorzugsweise erfolgt eine translatorische Verlagerung, insbesondere eine Parallelverschiebung, des Führungselementes (insbesondere der Achse). Alternativ oder zusätzlich kann aber auch ein Drehen und/oder Verkippen erfolgen.

Das Führungselement kann offen, bspw. U-förmig, oder geschlossen, also bspw. rechteck-förmig, ausgebildet sein. Hierauf kommt es für die Erfindung nicht an.

Besonders bevorzugterweise ist das Führungselement hinsichtlich mindestens dreier Freiheitsgrade einstellbar. Diese Ausführung kann insbesondere dadurch erreicht werden, dass das Führungselement einem freibeweglichen Roboterarm zugeordnet ist. Es ist vorzugsweise frei im Raum verlagerbar.

Andererseits sind auch Führungselemente von der Erfindung umfasst, welche lediglich schwenk- oder drehbar ausgebildet sind, oder linear verlagert werden oder verkippt werden. Es ist also auch eine Verstellung mit weniger als drei Freiheitsgraden, bspw. mit zwei Freiheitsgraden, möglich. Insbesondere kann eine Verstellung auch lediglich entlang einer Richtung oder in einer Ebene erfolgen.

Erfindungsgemäß führt die Verstellung des Führungselementes zu einer Änderung des Anstellwinkels des Bandes am Rohrgrundkörper.

Mit diesem Anstellwinkel ist dabei insbesondere der Winkel gemeint, welcher die Steigung des Bandes am Rohrgrundkörper definiert, also vorzugsweise der Winkel zwischen der Kontaktlinie von Band und Rohrgrundkörper und einem den Umfang des Rohrgrundkörpers definierenden Kreis(-Ring). Alternativ kann dieser auch als Winkel zwischen besagter Kontaktlinie und der Radialrichtung des Rohrgrundkörpers (in Aufsicht) definiert sein. Es ist also nicht der Winkel zwischen besagter Kontaktlinie und der Radialrichtung (Abstehwinkel) gemeint, welcher Winkel bei Rippenrohren typischerweise 90 Grad beträgt (in der Regel stehen Bänder von der Rippenoberfläche senkrecht ab).

Grundsätzlich sind aber auch Einsatzfälle vorstellbar, bei welchen der besagte Abstehwinkel von 90 Grad abweichen soll, und auch dies könnte ggf. mit einem verstellbaren Führungselement erreicht werden. Dies soll von der Erfindung zunächst jedenfalls nicht explizit ausgeschlossen werden.

Die Befestigung des Bandes am Rohrgrundkörper erfolgt erfindungsgemäß mithilfe eines Lasers.

Insbesondere soll aber auch der Einsatz mehrerer Laserstrahlen oder Laser nicht ausgeschlossen werden, insbesondere für den Fall, dass am Rippenrohr mehrere (parallele) Bänder angeordnet sind.

In diesem Sinne wird einem Rohrgrundkörper typischerweise ein Band zugeordnet. Allerdings sind auch Ausführungen bekannt, bei welchen der Rohrgrundkörper Rippen aufweist, welche aus mehreren (mindestens zwei) Bändern bestehen. Diese verlaufen dann typischerweise parallel, spiralförmig um den Rohrgrundkörper herum.

Der Rohrgrundkörper kann typischerweise aus Kupfer, Aluminium oder einem anderen geeigneten Metall (insbesondere Edelstahl) bestehen. Die Rippen können aus demselben Material bestehen, oder aus einem anderen geeigneten Material (bspw. Edelstahl, Kupfer, Aluminium, Titanium, oder ähnlichem).

In dem erfindungsgemäßen Verfahren werden typischerweise zunächst gerade Rippenrohre hergestellt. Diese können später weiterverarbeitet werden (bspw. geschnitten werden oder gebogen werden oder ähnliches).

Insbesondere können mit dem Verfahren auch Rippenrohre mit einer inneren Drallstruktur hergestellt werden. In diesem Fall würde dann das Verfahren einen Schritt des Ausbildens einer inneren Drallstruktur am Rohrgrundkörper umfassen, bspw. während, vor oder nach dem Berippungsvorgang. Insbesondere können die inneren Drallrippen bzw. die Verwirbelungsstruktur von der Außenseite her durchgedrückt werden, bspw. in einem Prägevorgang oder ähnlichem.

Als Rippensteigung wird dabei im Sinne der vorliegenden Patentanmeldung die Anzahl von Rippen pro Längeneinheit (des Rohrgrundkörpers) verstanden. Bspw. kann dies die Anzahl der Rippen pro Zoll sein oder die Anzahl der Rippen pro Zentimeter oder ähnliches. Die Rippen können dabei zu einem Band gehören oder (sofern mehrere Bänder parallel den Rohrgrundkörper umlaufen) auch zu unterschiedlichen.

Gemäß einer besonders bevorzugten Ausführungsform der Erfindung ist vorgesehen, dass das Führungselement zwischen mehreren Hauptzuführpositionen verstellt wird. Insbesondere kann jeder Hauptzuführposition eine (andere) Rippensteigung zugeordnet sein.

Soll der Rohrgrundkörper (zunächst) mit einer ersten Rippensteigung berippt werden, kann eine erste Hauptzuführposition eingestellt sein, soll eine zweite Steigung gewählt werden, eine zweite Hauptzuführposition etc. Insbesondere kann das Führungselement während des Befestigungsvorgangs, also während des Berippens, zwischen den Hauptzuführpositionen verstellt werden.

Die Positionen, die das Führungselement während des Verstellvorgangs zwischen den Hauptzuführpositionen einnimmt, können dann Nebenzuführpositionen genannt werden. Diese dienen dabei lediglich der Überführung aus einer Hauptzuführposition in eine andere Hauptzuführposition, wobei in den Nebenzuführpositionen dann typischerweise kein Anhalten des Führungselementes erfolgt. Mithin nimmt das Führungselement die Hauptzuführposition für einen längeren Zeitraum ein, die Nebenzuführpositionen dagegen lediglich übergangsweise, nämlich zum Verstellen zwischen den Hauptzuführpositionen.

In den Hauptzuführpositionen kann das Führungselement bspw. verrastbar, feststellbar oder festlegbar sein oder ähnliches.

Typischerweise sind die Hauptzuführpositionen vorgebbar und bspw. einem Roboterarm einprogrammierbar.

Die Nebenzuführpositionen werden dann typischerweise nicht extra vorgegeben, sondern werden während des Verstellens zwischen Hauptzuführpositionen zwangsläufig "überfahren"/"durchlaufen".

Soll bspw. ein Rippenrohr erstellt werden, welches in einem ersten Bereich eine erste Steigung aufweist und in einem zweiten Bereich eine zweite Steigung, so kann die Verstellung des Führungselementes derart erfolgen, dass das Führungselement während des Berippens des ersten Bereichs eine erste Hauptzuführposition einnimmt und während des Berippens des zweiten Bereichs eine zweite Hauptzuführposition. Das Verstellen kann also insbesondere erfolgen, wenn ein Wechsel der Berippung des ersten Bereichs zum zweiten Bereich hin erfolgt. Typischerweise erfolgt hierbei dann auch eine Beschleunigung des Rohrgrundkörpers (axial und/oder rotatorisch).

Es können zwei, drei oder auch noch mehr Hauptzuführpositionen vorgesehen sein. Zwischen den Hauptzuführpositionen kann das Befestigungselement automatisch und/oder manuell verstellbar sein. Aus einer Hauptzuführposition kann das Führungselement aber bspw. auch komplett in eine Wartungsposition oder ähnliches überführt werden, in welcher der Rohrgrundkörper bspw. frei zugänglich ist.

Von der Erfindung umfasst sind selbstverständlich aber auch Alternativen, bei welchen das Befestigungselement stufenlos einstellbar (und auch feststellbar) ist.

Gemäß einer weiteren vorteilhaften Ausgestaltung der Erfindung ist diese dadurch gekennzeichnet, dass das Führungselement eine Umlenkrolle aufweist. Führungseinrichtungen weisen typischerweise mehrere Umlenkrollen auf. In diesem Sinne kann das Führungselement bspw. die letzte, also in Verlagerungsrichtung des Bandes "downstream" befindliche, Umlenkrolle bereitstellen. Typischerweise kann die Achse der Umlenkrolle zum Verstellen des Führungselementes verlagert und/oder verkippt werden.

Anstelle einer Umlenkrolle kann aber auch eine nicht bewegliche Führungsfläche vorgesehen sein. Auch diese kann bspw. translatorisch verschiebbar ausgestaltet sein.

Besonders vorteilhaft hat sich eine Ausführungsform herausgestellt, bei welcher das Führungselement an einem Roboterarm oder einer ähnlichen Verstelleinrichtung angeordnet ist. Auf diese Weise ist eine besonders variable Verstellbarkeit des Führungselementes möglich.

Auch in diesem Ausführungsbeispiel kann das Führungselement bspw. eine Umlenkrolle aufweisen oder von dieser ausgebildet sein.

Roboterarme sind aus der Robotertechnik hinlänglich bekannt. Sie weisen dabei den Vorteil auf, dass das Führungselement zwischen besonders vielen Positionen verstellbar ist, bzw. nach Anforderung des Rohrgrundkörpers und der ganzen Berippungsstraße variabel einsetzbar bzw. in seiner Verstellbarkeit programmierbar ist.

Ein Roboterarm ermöglicht insbesondere auch ein vollständiges Wegstellen des Führungselementes, bspw. für den Fall von Wartungsarbeiten. Auch können für den Roboterarm verschiedene Programme vorgesehen sein, bspw. für unterschiedliche Bandarten (insbesondere hinsichtlich des Materials, der Größe, Maßungen oder ähnlichem).

Gemäß einer besonders vorteilhaften Ausgestaltung der Erfindung ist vorgesehen, dass die nächste Kontaktierung eines das Führungselement verlassenden Bandabschnittes mit dem Rohrgrundkörper erfolgt. In diesem Sinne erfolgt der Transport des Bandes bzw. Bandabschnittes von dem Führungselement zum Rohrgrundkörper typischerweise kontaktlos/durch die Luft.

Mit anderen Worten kann das Führungselement in der Bandabfolge das letzte Element sein, welches das Band kontaktiert, bevor es auf den Rohrgrundkörper trifft. Es kann das Element sein, welches dem Rohrgrundkörper von der ganzen Führungseinrichtung am nächsten kommt.

Die beschriebenen Verfahren können insbesondere mithilfe einer erfindungsgemäßen Vorrichtung nach Patentanspruch 7 durchgeführt werden. Besagte Vorrichtung weist demnach ein entsprechend verstellbares Führungselement auf. Das Führungselement kann bspw. Teil einer Verstelleinrichtung sein oder von einer Verstelleinrichtung verstellbar sein. Insbesondere kann natürlich auch ein Roboterarm oder ähnliches Teil der Verstelleinrichtung sein, ebenso wie die oben genannten Merkmale wie Rollen, Führungsflächen oder ähnliches.

An dieser Stelle sei darauf hingewiesen, dass auch bzgl. der Vorrichtung sämtliche voranstehenden Vorteile und Ausgestaltungen als offenbart gelten sollen, welche im Hinblick auf das beschriebene Verfahren dargelegt wurden. Diese Vorteile werden an dieser Stelle lediglich aus Gründen der Übersichtlichkeit der Anmeldung nicht noch einmal wiederholt.

Offenbart, aber nicht von den Ansprüchen der vorliegenden Patentanmeldung umfasst, ist auch ein Rippenrohr, welches durch eines der beschriebenen Verfahren oder eines der beschriebenen Vorrichtungen herstellbar ist.

Dieses Rippenrohr ist demnach insbesondere dadurch gekennzeichnet, dass es eine variierende Rippensteigung aufweist.

Eine variierende Rippensteigung ist beispielsweise aus der US 2,440,803 A bereits bekannt, da dort ein Bereich eines Rippenrohres enger berippt ist, um einen stabileren Haltebereich auszubilden. Es handelt sich dabei aber um gattungsfremden Stand der Technik, da dort kein Band an dem Rohrgrundkörper verschweißt ist und somit keine erstarrte Schmelze im Kontaktbereich zwischen Rohrgrundkörper und Band vorhanden ist, sondern vielmehr lediglich ein im Querschnitt dreieckiges Kabel um den Rohrgrundkörper gewickelt ist.

Mit anderen Worten weist das Rippenrohr mindestens einen ersten Abschnitt einer ersten Rippensteigung auf und einen zweiten Abschnitt einer zweiten, anderen Rippensteigung. Naturgemäß kann das Rippenrohr weitere Abschnitte oder Bereiche mit gleichen oder anderen Rippensteigungen aufweisen.

Typischerweise weisen die genannten Bereiche dabei aber dasselbe Band auf oder aber, sofern mehrere Bänder verwendet werden, sämtliche Bereiche dieselben Bänder. Mit anderen Worten erstreckt sich das Band bzw. die Bänder über das ganze Rippenrohr und somit über sämtliche genannten Bereiche.

Auch für das Rippenrohr sollen die im Zusammenhang mit dem obigen Verfahren (aber auch mit der beschriebenen Vorrichtung) beschriebenen Vorteile und Ausgestaltungen als offenbart gelten.

Insbesondere wird auf die oben dargelegte Materialzusammensetzung von Rohrgrundkörper und/oder Bandmaterial Bezug genommen.

Gemäß einer besonders vorteilhaften Ausgestaltung weist das Rippenrohr mehrere Bereiche mit einer in sich im Wesentlichen homogenen Rippensteigung auf, welche aber zu der Rippensteigung mindestens eines anderen Bereiches unterschiedlich ist. In diesem Sinne können naturgemäß auch mehr als zwei Bereiche mit unterschiedlichen Rippensteigungen vorgesehen sein.

Im Wesentlichen homogen bedeutet dabei, dass der Bereich eine im Wesentlichen gleich bleibende Rippensteigung aufweist. Aufgrund von Fertigungsintoleranzen können die Rippen dabei natürlich minimal unterschiedliche Abstände voneinander haben. Diese sollten aber im Vergleich zu dem Abstand der Rippen in einem anderen Bereich vernachlässigbar sein.

Insbesondere ist darauf hinzuweisen, dass im Grenzbereich zwischen zwei Bereichen natürlich ein Übergangsbereich entstehen kann, da die Rippensteigung produktionsbedingt nicht stufenlos von einem Wert auf den anderen einstellbar ist, sondern sich in der Regel über den kurzen Übergangsbereich kontinuierlich ändert.

Vorzugsweise stehen die Rippen wie oben bereits beschrieben in einem 90 Grad Winkel von der Rippenoberfläche ab (Abstehwinkel).

Alternativ zu der Ausgestaltung mit mehreren Bereichen unterschiedlicher Rippensteigung sind aber selbstverständlich auch Ausgestaltungen von Rippenrohren mit kontinuierlich variierender Rippensteigung offenbart (bspw. kann die Funktion des Anstiegs der Rippensteigung über die Rohrlänge sogar linear sein oder ähnliches).

Auch sind etliche Rippenrohre mit Bereichen vorstellbar, die sich ihrer Ausgestaltung nach wiederholen (also ein erster Bereich mit einer ansteigenden oder abfallenden oder konstanten Rippensteigung und dann - oder weiter entfernt - ein zweiter oder mehrere identische Bereiche).

Schließlich ist offenbart, dass das Rippenrohr eine monotone Änderung der Rippensteigung aufweist. Dies kann sowohl für eine kontinuierlich variierende Rippensteigung gelten, als auch für Rippenrohre mit (diskreten) Bereichen einer in sich homogenen Rippensteigung.

Insbesondere kann sich die Rippensteigung streng monoton ändern also über die Rippenrohrlänge durchgehend fallen oder ansteigen.

Gerade bei der Ausgestaltung mit unterschiedlichen Bereichen homogener Rippensteigung kann aber eine nicht-strenge, jedoch monotone Änderung der Rippensteigung vorliegen, bspw. wenn man einen ersten Bereich annimmt, welcher eine niedrigere Rippensteigung aufweist und einen zweiten Bereich mit einer höheren Rippensteigung (ggf. noch weitere Bereiche mit jeweils höheren Rippensteigungen).

Alternativ sind aber auch Rippenrohre ohne monotone Änderung der Rippensteigung offenbart, bspw. solche, bei welchen die Steigung zunächst zunimmt und dann wieder abnimmt oder umgekehrt.

Es kann vorteilhafterweise auch eine Ausgestaltung des Rippenrohres vorgesehen werden, bei welcher das Rippenrohr mehr als ein Band aufweist und die Rippensteigung trotzdem variiert. Insbesondere sind die Bänder dabei im Wesentlichen parallel angeordnet und somit variiert auch die Steigung der mindestens zwei Bänder (über die Länge des Rippenrohres) im Wesentlichen identisch.

Dies ist insbesondere deshalb notwendig, damit sich die einzelnen Bänder nicht kreuzen oder einander im Wege stehen.

Weitere Vorteile der Erfindung ergeben sich aus den gegebenenfalls nicht zitierten Unteransprüchen, sowie aus der nun folgenden Figurenbeschreibung.

Darin zeigen in den Figuren:
- Fig. 1: in einer sehr schematischen, teilgeschnittenen Seitenansicht ein Rippenrohr in einer geraden bzw. noch ungeformten Ausführung mit zwei Bereichen unterschiedlicher Rippensteigung,
- Fig. 2: einen ebenfalls schematischen, vergrößerten Ausschnitt eines Rippenrohres unter Darstellung einer einzelnen Rippe,
- Fig. 3: der Abschnitt gemäß Kreis III in Fig. 2 in vergrößerter Darstellung unter Hinzufügung einer weiteren, noch nicht verschweißten Rippe, links von der in Fig. 2 dargestellten, bereits befestigten Rippe,
- Fig. 4: in einer sehr schematischen, perspektivischen Ansicht ein erfindungsgemäßer Aufwicklungsprozess eines Bandes auf einen Rohrgrundkörper unter Darstellung eines exemplarisch als Rolle ausgebildeten Führungselementes,
- Fig. 5: die Anordnung gemäß der Fig. 4 in einer Ansicht, etwa gemäß Ansichtspfeil V in Figur 4, in einer sehr schematischen Aufsicht,
- Fig. 6: zwei leicht abgewandelte Ausführungsbeispiele von Führungselementen, welche insbesondere keiner Rollenführung entsprechen, nämlich nach Art von Kulissenführungen in einer sehr schematischen (geschnittenen) Frontansicht,
- Fig. 7: in einer sehr schematischen Seitenansicht ein an einem Roboterarm angeordnetes Führungselement während des Berippungsprozesses,
- Fig. 8: in einer sehr schematischen Aufsicht eine Prinzipsskizze eines lediglich angedeuteten Führungselementes in drei unterschiedlichen Hauptzuführpositionen, und
- Fig. 9: in einer Seitenansicht, etwa gemäß Fig. 1, jedoch abgebrochen und nicht teilgeschnitten, ein weiteres Rippenrohr mit drei Bereichen unterschiedlicher Rippensteigung.

Der nachfolgenden Figurenbeschreibung sei vorangestellt, dass gleiche oder vergleichbare Teile gegebenenfalls mit identischen Bezugszeichen versehen sind, teilweise unter Hinzufügung kleiner Buchstaben oder von Apostrophen. Gleiches gilt auch für die anschließenden Patentansprüche.

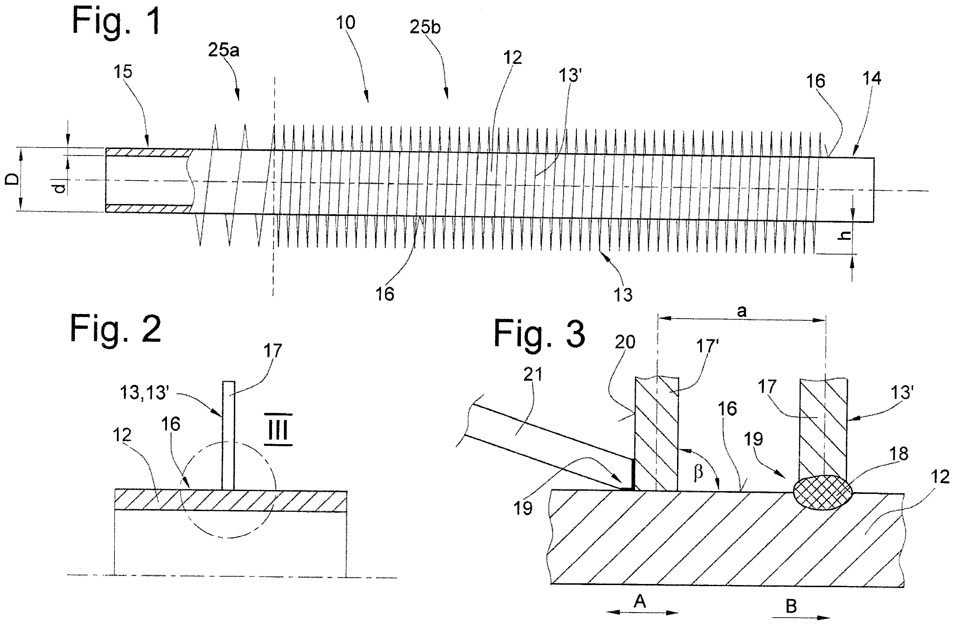

Fig. 1 zeigt zunächst ein bereits fertiggestelltes, erfindungsgemäßes, Rippenrohr 10, welches dem Grunde nach aus zwei separaten Stücken hergestellt worden ist: So ist zunächst ein Rohrgrundkörper 12 vorgesehen, welcher als gerades Rundrohr ausgebildet ist. Um den Grundkörper 12 ist ein Kupferband 13 (alternativ ein Aluminiumband oder ein anderes Band) wendelförmig gewickelt und an dem Rohrgrundkörper 12 verschweisst. Das Band 13 bildet hierdurch also eine "endlose" Struktur aus Rippen 13' aus (wobei die Struktur der Rippen 13' natürlich tatsächlich eine endliche, festgelegte Länge aufweist; die Rippenstruktur ist mit anderen Worten durchgängig ausgebildet).

Das Band 13 lässt ausweislich Fig. 1 die Enden 14 und 15 des Rohrgrundkörpers 12 freistehen und ist an der Oberfläche 16 des Rohrgrundkörpers 12 verschweißt. Dieser ist, wie insbesondere an dem linken Ende 15 des Rohrgrundkörpers in der teiltransparenten Darstellung ersichtlich, hohl ausgebildet, mit einer Wandstärke d und einem Durchmesser D. Die Rippe 13' weist hierbei eine Rippenhöhe h auf.

Fig. 1 verdeutlicht hierbei, dass es sich bei dem Rippenrohr 10 um ein Rippenrohr mit einer variierenden Rippensteigung handelt: So sind an dem Rippenrohr 10 insbesondere zwei Bereiche 25a und 25b vorgesehen. Während der (in dem Ausführungsbeispiel größere) Bereich 25b eine relativ hohe Rippensteigung aufweist, weist der Bereich 25a nur etwa eine halb so hohe Rippensteigung auf. Mit anderen Worten ist der Abstand a zwischen den Rippen 13' im Bereich 25b nur halb so groß wie der Abstand der Rippen 13' im Bereich 25a.

Ein derartiger Effekt kann insbesondere dadurch erzielt werden, dass die Axial/Vorschub- und/oder die Rotationsgeschwindigkeit des Rohrgrundkörpers 12 während des Berippens variiert. Damit hierbei das Band 13 nicht reißt, wird hierzu insbesondere ein verstellbares Führungselement 11 eingesetzt, wie es später noch genauer beschrieben wird.

Das grundsätzliche Anbringen des Bandes 13 am Grundkörper 12 wird nun anhand der Figuren 2 und 3 näher erläutert:
Hierbei zeigt Fig. 2 zunächst in einer rein schematischen, teilgeschnittenen Darstellung die vergrößerte Einzeldarstellung eines Querschnitts 17 einer bereits verschweißten Rippe 13'. Die Rippe 13' ist in dem dargestellten Bereich an der Rohroberfläche 16 verschweißt.

Fig. 3 zeigt in ihrem rechten Darstellungsbereich besagte Rippe 13' im bereits verschweißten Zustand. Fig. 3 lässt dabei die bereits erstarrte Schmelze 18 im Kontaktbereich 19 zwischen Rohrgrundkörper 12 und Band 13 erkennen. Die Schmelze 18 besteht anteilig aus Material sowohl des Rohrgrundkörpers 12 als auch des Bandes 13 bzw. der Rippe 13' (an deren Unterseite).

Die Rippe 13' ist hierzu im Querschnitt in etwa rechteckig ausgebildet.

Die in Fig. 3 rechtsseitig dargestellte Rippe 13' befindet sich in Berippungsrichtung B (als bereits festgelegter Abschnitt) weiter vorne als ein in Fig. 3 ebenfalls dargestellter Querschnitt 17' einer weiteren Rippe. Dieser Querschnitt 17' der weiteren Rippe bzw. des Bandes 13 wird in Fig. 3 gerade in dem Kontaktbereich 19 (welcher aufgrund der im Querschnitt geraden Rohroberfläche 16 und der geraden Seitenkante 20 der Rippe im Wesentlichen L-förmig ausgebildet ist) verschweißt.

Hierzu fällt ein Laserstrahl 21 eines in Fig. 3 noch nicht dargestellten Lasers auf den Kontaktbereich 19. Der Laserstrahl 21 bestrahlt hierbei sowohl Material des Bandes 13 bzw. des Querschnittes 17' als auch Material des Rohrgrundkörpers 12, insbesondere an dessen Oberfläche 16.

Da sich der Querschnitt 17 des Bandes 13 in Berippungsrichtung B vor dem Querschnitt 17' befindet, stellt der linke Querschnitt gemäß Fig. 3 sozusagen den Zustand des Verschweißens eines Abschnittes des Bandes 13 dar und die rechte Seite gemäß Fig. 3 dann den fertigen, angeschweißten Zustand eines Abschnittes des Bandes 13. Weitere Abschnitte des Bandes/Rippen würden sich natürlich insbesondere in Berippungsrichtung B (und somit bereits verschweißt) mit definierter Rippensteigung anschließen.

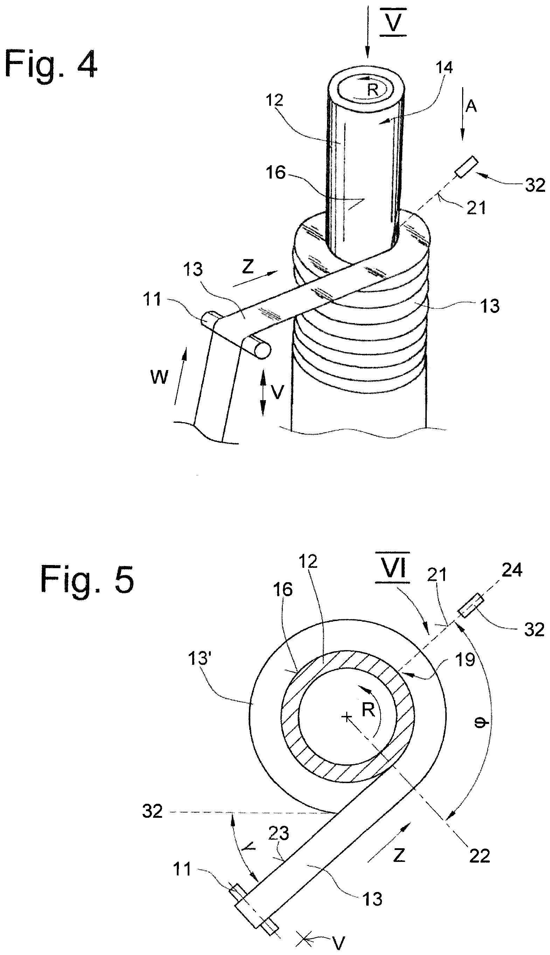

Fig. 4 verdeutlicht in einer perspektivischen, aber gleichfalls schematischen Ansicht das Bewickeln des Rohrgrundkörpers 12 mit dem Band 13. Bereits Fig. 4 ist hierbei zu entnehmen, dass das Band 13 schließlich gerade, im Wesentlichen entlang einer Zuführrichtung Z auf den Rohrgrundkörper 12 zuläuft und diesen dann an seiner Oberfläche 16 tangential kontaktiert.

Bevor das Band 13 allerdings in Zuführrichtung Z geführt wird, verläuft es ausweislich Fig. 4 zunächst entlang einer anderen Abwicklungsrichtung W. Es wird dabei von einem als Rolle ausgebildeten Führungselement 11 umgelenkt, nämlich aus der Richtung W in Richtung Z. Das Führungselement 11 gemäß der Fig. 4 und 5 ist somit als Umlenkrolle ausgebildet. Dieses Führungselement 11 ist dabei typischerweise Bestandteil einer ansonsten nicht dargestellten Führungseinrichtung für das Band 13.

Die erfindungsgemäße Besonderheit besteht nunmehr darin, dass dieses Führungselement 11 verstellbar ist, in dem Ausführungsbeispiel gemäß der Fig. 4 und 5 bspw. entlang einer, insbesondere linearen, Verstellrichtung V. Diese Verstellbarkeit des Führungselementes 11 entlang der Verstellrichtung V ermöglicht hierbei insbesondere ein Anpassen an die Änderung der Verlagerungsgeschwindigkeit des Rohrgrundkörpers 12 in Axialrichtung A und/oder Rotationsrichtung R.

Lediglich der Vollständigkeit halber sei angemerkt, dass eine entsprechende Führungseinrichtung in der Praxis tatsächlich mehr als nur ein Umlenkelement aufweist, um das Band von einem Vorrat bzw. einer "Coil" zielgerichtet auf den Rohrgrundkörper 12 zuleiten zu können.

Der Rohrgrundkörper 12 ist - wie allerdings nicht dargestellt - eingespannt, um diesen drehend in Rotationsrichtung R sowie axial in Axialrichtung A anzutreiben. Der Rohrgrundkörper 12 kann bei diesem Antrieb das Band 13 mitziehen und dieses, beispielsweise von einer Vorratsrolle ("Coil") oder einem Teller oder Bett (ebenfalls nicht dargestellt) gerichtet und unter einer definierten Zug- und Bremskraftwirkung abziehen. Zusätzlich kann auch ein Antrieb für die Vorratsrolle (beispielsweise ein Spulenantrieb) vorgesehen werden.

Aufgrund dieser Zugkraft und einer gegebenenfalls vorhandenen Vorschubbewegung des Bandes 13 wird das Band 13 an der Oberfläche 16 des Rohrgrundkörpers 12 kontinuierlich und fortschreitend beaufschlagt. Die Beaufschlagung beginnt ausweislich Fig. 5 etwa ab einem Bereich, welcher dort mit einer radialen Achse 22 gekennzeichnet ist.

Das Band 13 liegt ab diesem Bereich also mit seiner Unterseite 23 kontaktierend an der Oberseite 16 des Rohrgrundkörpers 12 an. Infolge der Rotationsbewegung in Rotationsrichtung R läuft das Band 13 sodann, die Oberfläche 16 des Rohrgrundkörpers 12 kontaktierend, über einen Winkelbereich ϕ mit dem Rohrgrundkörper 12 mit, bevor es im Bereich einer mit 24 bezeichneten radialen Achse von einem Laserstrahl 21 mit dem Rohrgrundkörper 12 verschweißt wird.

Der Laserstrahl 21 wird von einem lediglich sehr schematisch dargestellten Laser 32 erzeugt. Dieser Laser 32 kann hierbei eine flexible Zuleitung vorsehen, welche eine ideale Einstellung auf den zu bestrahlenden Kontaktbereich 19 ermöglicht.

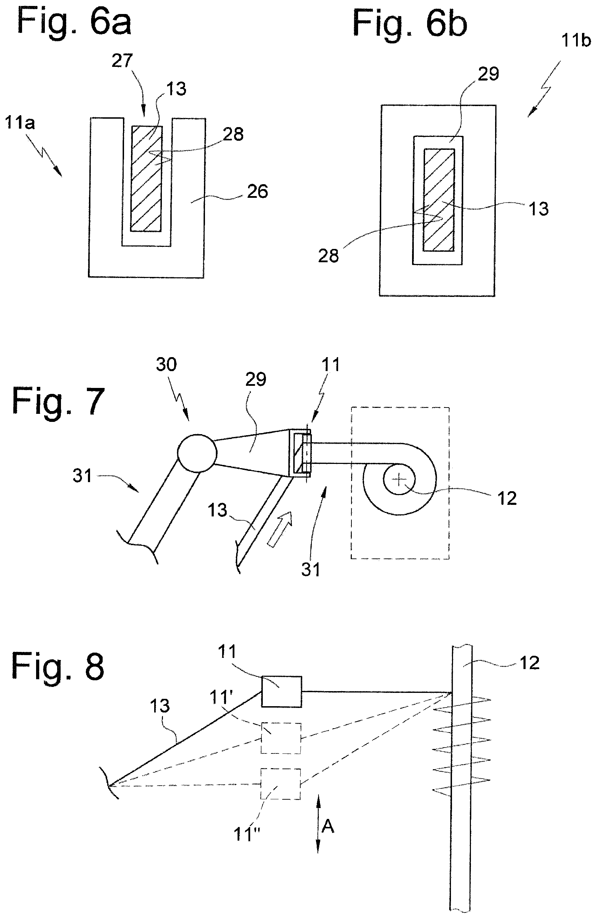

Während es sich bei dem erfindungsgemäßen Führungselement 11 gemäß der Fig. 4 und 5 um ein lenkrollenartig ausgebildetes Führungselement handelt, zeigen die Fig. 6a und 6b alternative Ausgestaltungen 11a und 11b eines erfindungsgemäßen Führungselements.

So soll Fig. 6 insbesondere verdeutlichen, dass das Führungselement selber gar keine beweglichen Teile, bspw. keine Umlenkrolle, aufweisen muss: Fig. 6a illustriert in diesem Sinne, dass das Führungselement 11a bspw. als im Querschnitt etwa gabelförmiger Körper 26 ausgebildet sein kann, welcher eine Kulisse 27 zur Führung des Bandes 13 bereitstellt. Die die Kulisse 27 begrenzenden Flächen können dementsprechend auch Führungsflächen 28 genannt werden.

Eine alternative Ausgestaltung zeigt Fig. 6b, in welcher das Führungselement 11b im Wesentlichen geschlossen ausgebildet ist, das Band 13 mithin durch eine Ausnehmung 29 (bzw. geschlossene Kulisse) geführt wird. Auch diese geschlossene Kulisse 29 kann dabei von entsprechenden Führungsflächen 28 begrenzt sein.

Völlig unabhängig davon, ob das Führungselement mit oder ohne Umlenkrollen ausgebildet ist, ist für die Erfindung die Verstellbarkeit des Führungselementes entscheidend: In allen erfindungsgemäßen Fällen ist das Führungselement (relativ zum Rohrgrundkörper) verstellbar, bspw. schwenkbar oder vorteilhafterweise linear oder translatorisch verschiebbar.

In diesem Sinne sei darauf hingewiesen, dass eine Umlenkrolle des Führungselementes 11 noch kein verstellbares Führungselement ausbildet. Vielmehr ist bei Vorhandensein einer Umlenkrolle für eine Verstellbarkeit wichtig, dass die Umlenkrolle bzw. deren Achse verstellbar bzw. verschiebbar ist (bspw. eine Parallelverschiebung erfahren kann). In diesem Sinne deutet Figur 4 bereits eine Parallelverschiebung oder lineare Verschiebung der Achse des umlenkrollenartigen Führungselementes 11 an. Diese Verschiebung führt dann typischerweise (gemeinsam mit einer Geschwindigkeitsänderung des Rohrgrundkörpers 12) zu einer Steigungsänderung der Rippen.

Mit anderen Worten kann eine (axiale und/oder rotatorische) Geschwindigkeitsänderung des Rohrgrundkörpers 12 zum Erreichen einer anderen Rippensteigung durch eine Verstellung des Führungselementes unterstützt bzw. abgefedert werden, insbesondere in dem Sinne, dass durch die Geschwindigkeitsänderung entstehende Spannungen abgebaut werden können.

Fig. 7 zeigt eine besonders vorteilhafte Ausgestaltung der Erfindung: Hier ist ein nicht näher ausgeführtes Führungselement 11 (mit oder ohne Umlenkrolle) am Ende eines Gliedes 29 eines Roboterarmes 30 angeordnet. Bei diesem Roboterarm 30 kann es sich um einen typischen Roboterarm handeln, wie er aus der Robotik oder Roboterautomatik bekannt ist. Insbesondere können zwischen den einzelnen Gliedern (29 und 31 in dem Ausführungsbeispiel) Gelenkpunkte vorgesehen sein. Ebenfalls können zusätzliche Gelenke auch am Ende des abschließenden Gliedes 29 also bspw. im Wesentlichen im Bereich des Führungselementes 11 vorgesehen sein (nicht explizit dargestellt).

Die Anordnung des Führungselementes 11 an einem Roboterarm ermöglicht/erleichtert dabei die Produktion der erfindungsgemäßen Rippenrohre. Insbesondere kann eine Verstellung während der Berippung erfolgen, nämlich bspw. für den Fall, dass zur Erzielung einer Änderung der Rippensteigung eine Geschwindigkeitsänderung (rotatorisch oder in axialer Richtung) des zu berippenden Rohrgrundkörpers 12 erfolgt.

In Fig. 7 ist übrigens keine Halterung oder Spannvorrichtung für den Rohrgrundkörper 12 dargestellt. Eine solche Apparatur wird lediglich durch einen gestrichelten Kasten angedeutet.

Der Roboterarm 30 hat auch noch weitere Vorteile, nämlich bspw. den, dass bei einer Produktionspause oder ähnlichem das Führungselement 11, bspw. zu Wartungszwecken, aus dem Bereich 31 vor dem Übergabepunkt des Bandes 13 an den Rohrgrundkörper 12 weggestellt werden kann (mithin kann der Roboterarm 30 hierfür verschwenkt werden).

Fig. 8 verdeutlicht dann, wie das Führungselement 11 rein exemplarisch zwischen drei Hauptzuführpositionen verstellbar ist: So ist das durchgezogen dargestellte Führungselement 11 in der Aufsicht gemäß Fig. 8 über eine nicht dargestellte Verstelleinrichtung (dies muss nicht zwangsläufig ein Roboterarm sein), in diesem Ausführungsbeispiel exemplarisch linear, verstellbar, bspw. in oder entgegen der Axialrichtung A, welche der Verstellrichtung V entspricht.

Demnach sind in Fig. 8 gestrichelt zwei weitere Hauptzuführpositionen 11' und 11" des Führungselementes angedeutet, welche insbesondere verdeutlichen, dass das Band 13 in allen drei dargestellten Fällen in einem geringfügig anderen Winkel auf den Rohrgrundkörper 12 trifft (Fig. 8 stellt dabei aber insbesondere eine überhöhte bzw. überspitzte Darstellung dar). Dieser andere Auftreffwinkel kann hierbei insbesondere für einen Ausgleich, Abbau oder eine Angleichung von Spannungen sorgen, die bei der Änderung der Bandsteigung während des Berippungsprozesses auftreten können.

Bei dem zu ändernden Winkel handelt es sich typischerweise nicht um denjenigen Winkel, in welchem das Band 13 bzw. die Rippe 13' von der Oberfläche 16 des Rohrgrundkörpers 12 absteht: Dieser Winkel β beträgt ausweislich Fig. 3 nämlich typischerweise etwa 90 Grad und wird hier "Abstehwinkel" genannt. Er ist typischerweise konstant.

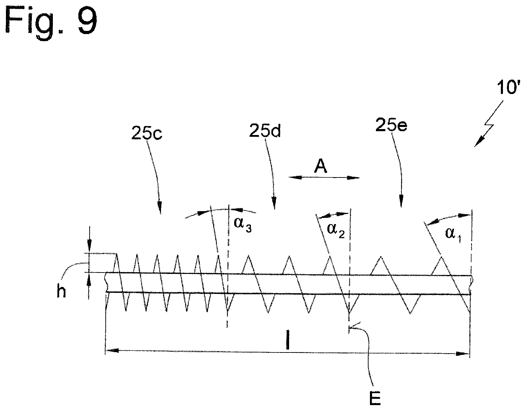

Vielmehr handelt es sich ausweislich Fig. 9 um den Winkel, in welchem das Band entweder in Aufsicht von der Axialrichtung A des Rohrgrundkörpers 12 abweicht oder (was in Fig. 9 mit dem Winkel α bezeichnet ist) um den Winkel, um den das Band bzw. die Rippe (bzw. deren Projektion) von der Orthogonal-Ebene E der Axialrichtung A abweicht.

Fig. 9 zeigt dabei ein weiteres exemplarisches, erfindungsgemäßes Rippenrohr 10', welches im Vergleich mit dem Rippenrohr 10 gemäß Fig. 1 allerdings nicht lediglich zwei Bereiche 25a und 25b unterschiedlicher Steigung aufweist, sondern vielmehr drei unterschiedliche Bereiche 25c, 25d und 25e.

Fig. 9 verdeutlicht somit, dass das erfindungsgemäße Rippenrohr mehr als zwei verschiedene Rippensteigungen bzw. mehr als zwei unterschiedliche Bereiche mit homogener Rippensteigung aufweisen kann: Im Ausführungsbeispiel gemäß Fig. 9 weist der Bereich 25c eine hohe Rippensteigung auf, der Bereich 25d eine mittlere Rippensteigung und der Bereich 25e die geringste Rippensteigung. Dementsprechend ist der Winkel α₁ größer als der Winkel α₂ und dieser wiederum größer als der Winkel α₃ (wobei α also den Winkel der Abweichung der Rippe von der Orthogonal-Ebene E zur Axialrichtung A bzw. von dem Rohrumfangskreis kennzeichnet).

Bei dem nicht dargestellten Abweichwinkel der Rippe zur Axialrichtung A würde es sich gerade umgekehrt verhalten (dieser wäre für den Bereich 25e am kleinsten, für den Bereich 25c am größten). Beide Winkelarten sind aber grundsätzlich dazu geeignet, die Änderung bei abweichender Rippensteigung zu illustrieren.

Die Rippensteigung des Rohres 10' gemäß Fig. 9 ist also von links nach rechts (nicht streng) monoton steigend.

Nicht dargestellt, aber gleichfalls von der Offenbarung umfasst, sind auch Rippenrohre, welche mehrere, voneinander separierte, Bereiche gleicher Steigung aufweisen (bspw. einen ersten Bereich einer ersten Steigung, einen zweiten Bereich einer zweiten Steigung und einen dritten Bereich einer wieder ersten Steigung).

## Patentansprüche

1. Verfahren zur Herstellung eines Rippenrohres (10), bei welchem ein Rohrgrundkörper (12) auf seiner Außenseite (16) wendelförmig mit einem Band (13) berippt wird, wozu das Band (13) unter Einsatz eines Führungselementes (11) an den Rohrgrundkörper (12) herangeführt und an diesem befestigt wird, nämlich mithilfe eines Laserstrahls (21), wobei das Rippenrohr (10) mit einer variierenden Rippensteigung hergestellt wird, **dadurch gekennzeichnet, dass** das Führungselement (11) während des Befestigungsvorgangs des Bandes (13) an dem Rohrgrundkörper (12), unter Anpassung des Anstellwinkels (α) des Bandes (13) an die Geschwindigkeit oder Geschwindigkeitsänderung des Rohrgrundkörpers (12), verstellt wird.

2. Verfahren nach Anspruch 1, **dadurch gekennzeichnet, dass** das Führungselement (11) zwischen mehreren, vorzugsweise mindestens drei, Hauptzuführpositionen verstellt wird, welche insbesondere jeweils eine unterschiedliche Bandsteigung definieren.

3. Verfahren nach einem der voranstehenden Ansprüche, **dadurch gekennzeichnet, dass** das Führungselement (11) eine Umlenkrolle aufweist, insbesondere derart, dass das dessen Achse zum Verstellen des Führungselementes translatorisch verlagert und/oder verkippt wird.

4. Verfahren nach einem der voranstehenden Ansprüche, **dadurch gekennzeichnet, dass** das Führungselement (11) an einem Roboterarm (30) angeordnet ist.

5. Verfahren nach einem der voranstehenden Ansprüche, **dadurch gekennzeichnet, dass** die nächste Kontaktierung eines das Führungselement (11) verlassenden Bandabschnittes mit dem Rohrgrundkörper (12) erfolgt.

6. Verfahren nach einem der voranstehenden Ansprüche, **dadurch gekennzeichnet, dass** der Rohrgrundkörper (12) während des Befestigungsvorgangs eine, insbesondere axiale und/oder rotatorische, Geschwindigkeitsänderung erfährt.

7. Vorrichtung zur Herstellung eines Rippenrohres (10) mit einem an der Außenseite (16) eines Rohgrundkörpers (12) mit Hilfe eines Laserstrahls (21) wendelförmig befestigten Band (13) und mit einer variierenden Rippensteigung, wobei die Vorrichtung einen Laser und ein während des Befestigungsvorgangs automatisch oder automatisiert verstellbares Führungselement (11) zum Heranführen des Bandes (13) an den Rohrgrundkörper aufweist, **dadurch gekennzeichnet, dass** die Vorrichtung dazu konfiguriert ist, den Anstellwinkel (α) des Bandes (13) durch ein Verstellen des Führungselementes (11) an die Geschwindigkeit oder Geschwindigkeitsänderung des Rohrgrundkörpers (12) anzupassen.

## Claims

1. Method for producing a ribbed tube (10), in which a tube base body (12) is helically ribbed with a tape (13) on its outside (16), for which purpose the tape (13) is introduced to the tube base body (12) and is fixed thereto, specifically using a laser beam (21), wherein the ribbed tube (10) is produced with a varying rib incline, **characterised in that** the guide element (11) is displaced during the fixing process of the tape (13) to the tube base body (12) while adjusting the working angle (α) of the tape (13) to the speed or change in speed of the tube base body (12).

2. Method according to claim 1, **characterised in that** the guide element (11) is displaced between several, preferably at least three, main delivery positions, which in particular respectively define a different tape incline.

3. Method according to one of the preceding claims, **characterised in that** the guide element (11) has a deflection roller, in particular of such a kind that its axis is translationally displaced and/or tilted in order to displace the guide element.

4. Method according to one of the preceding claims, **characterised in that** the guide element (11) is arranged on a robot arm (30).

5. Method according to one of the preceding claims, **characterised in that** a tape portion leading the guide element (11) is next contacted with the tube base body (12).

6. Method according to one of the preceding claims, **characterised in that** the tube base body (12) undergoes an in particular axial and/or rotational change in speed during the fixing process.

7. Device for producing a ribbed tube (10) having a tape (13) that is helically fixed to the outside (16) of a tube base body (12) using a laser beam (21), and having a varying rib incline, wherein the device has a laser and a guide element (11) which can be displaced automatically or via automation during the fixing process in order to deliver the tape (13) to the tube base body, **characterised in that** the device can be configured to adjust the working angle (α) of the tape (13) to the speed or change in speed of the tube base body (12) by displacing the guide element (11).

## Revendications

1. Procédé pour la fabrication d'un tube à ailettes (10), selon lequel un corps de base de tube (12) est nervuré en forme de spirale sur sa face extérieure (16) avec une bande (13), ce pourquoi la bande (13) est conduite par le biais d'un élément de guidage (11) sur le corps de base de tube (12) et fixée sur celui-ci, notamment à l'aide d'un faisceau laser (21), le tube à ailettes (10) étant fabriqué avec une inclinaison variable des ailettes, **caractérisé en ce que**, lors du processus de fixation de la bande (13) sur le corps de base de tube (12), l'élément de guidage (11) est réglé en adaptant l'angle d'attaque (α) de la bande (13) à la vitesse ou à la variation de vitesse du corps de base de tube (12).

2. Procédé selon la revendication 1, **caractérisé en ce que** l'élément de guidage (11) est réglé entre plusieurs, de préférence au moins trois, positions d'amenée principales qui définissent en particulier chacune une inclinaison de bande différente.

3. Procédé selon une des revendications précédentes, **caractérisé en ce que** l'élément de guidage (11) comporte un rouleau de renvoi, en particulier de telle sorte que son axe est déplacé en translation et/ou incliné pour le réglage de l'élément de guidage.

4. Procédé selon une des revendications précédentes, **caractérisé en ce que** l'élément de guidage (11) est agencé sur un bras de robot.

5. Procédé selon une des revendications précédentes, **caractérisé en ce qu'**ensuite, un segment de bande quittant l'élément de guidage (11) est mis en contact avec le corps de base de tube (12).

6. Procédé selon une des revendications précédentes, **caractérisé en ce qu'**au cours du processus de fixation, le corps de base de tube (12) subit une variation de vitesse, en particulier axiale et/ou rotative.

7. Dispositif pour fabriquer un tube à ailettes (10) avec une bande (13) fixée en forme de spirale sur une face extérieure (16) d'un corps de base de tube (12) à l'aide d'un faisceau laser (21) et avec une inclinaison variable des ailettes, ce dispositif comportant un laser et un élément de guidage (11) réglable de façon automatique ou automatisée au cours du processus de fixation pour conduire la bande sur le corps de base de tube, **caractérisé en ce que** ce dispositif est configuré pour adapter l'angle d'attaque (α) de la bande (13) à la vitesse ou à la variation de vitesse du corps de base de tube (12) par un réglage de l'élément de guidage (11).
